# EUROPÄISCHE PATENTSCHRIFT

(11) **EP 3 347 804 B1**
(45) Veröffentlichungstag und Bekanntmachung des Hinweises auf die Patenterteilung: **23.01.2019**
(21) Anmeldenummer: 16731507.6
(22) Anmeldetag: 04.06.2016
(51) Int. Cl.: G06F 3/0488, B60K 37/06, G06F 3/023

(54) **BEDIENVORRICHTUNG MIT ZEICHENEINGABE UND LÖSCHFUNKTION**
OPERATING DEVICE WITH CHARACTER INPUT AND DELETE FUNCTION
DISPOSITIF DE COMMANDE AVEC UNE ENTRÉE DE CARACTÈRES ET UNE FONCTION D'EFFACEMENT

(30) Priorität: 11.09.2015 DE 102015011649
(43) Veröffentlichungstag der Anmeldung: 18.07.2018
(73) Patentinhaber: Audi AG, 85045 Ingolstadt (DE)
(72) Erfinder: BOUAZIZ, Tahar, 85055 Ingolstadt (DE); BÖHM, Franziska, 85057 Ingolstadt (DE)
(86) Internationale Anmeldenummer: PCT/EP2016/000922
(87) Internationale Veröffentlichungsnummer: WO 2017/041867

(56) Entgegenhaltungen:
- EP-A1- 2 660 699
- US-A1- 2010 313 158
- US-A1- 2010 333 027
- US-A1- 2013 067 383

## Beschreibung

Die Erfindung betrifft eine Bedienvorrichtung, die insbesondere für ein Kraftfahrzeug vorgesehen ist. Mittels der Bedienvorrichtung können Zeichen eingegeben werden. Hierzu ist eine Eingabevorrichtung zum Empfangen einer Zeicheneingabe eines Benutzers vorgesehen. Eine Anzeigeeinrichtung zeigt die eingegebenen Zeichen in einem Eingabefeld an. Um ein eingegebenes Zeichen zu löschen, ist eine Löscheinrichtung bereitgestellt, die ein Löschelement nacheinander über die angezeigten Zeichen bewegt und hierbei jeweils das Zeichen, über welches es bewegt wurde, löscht oder zum Löschen markiert. Zu der Erfindung gehören auch ein Kraftfahrzeug mit der Bedienvorrichtung sowie ein Verfahren zum Betreiben der Bedienvorrichtung.

Zum Eingeben einer Zeichenfolge für eine Gerätebedienung ist im Stand der Technik bekannt, hierzu mittels einer Anzeigeeinrichtung ein Eingabefeld anzuzeigen, in welches der Benutzer mittels einer Eingabeeinrichtung die einzelnen Zeichen eingeben kann. Die Eingabe kann beispielsweise durch Eintippen der Zeichen, das heißt durch Bedienen einer Tastatur, oder durch eine Spracheingabe erfolgen. Zum Löschen fehlerhafter Zeichen ist in der Regel eine Löschtaste oder Delete-Taste vorgesehen. Durch Drücken der Taste wird ein Löschelement, beispielsweise der Cursor, schrittweise über das zuletzt eingegebene Zeichen bewegt und hierbei gelöscht. Möchte der Benutzer mehrere Zeichen löschen, hält er die Löschtaste gedrückt, so dass sich das Löschelement nacheinander über mehrere der angezeigten Zeichen bewegt und diese dabei löscht.

Das Dokument US2010/0333027A1 beschreibt ein Gerät mit einem Löschschiebermechanismus, bei dem ein oder mehrere Zeichen auf einem Bildschirm durch unterschiedliche Arten der Berührung eines auf dem Bildschirm dargestellten Icons mit dem Finger oder einem Zeigegerät gelöscht werden können. Bei der Interaktion des Benutzers mit dem Gerät, muss er den Darstellungsbereich des Icons auf dem Bildschirm mit seinem Finger oder einem Zeigegerät berühren. Dieses Icon befindet sich während der Interaktion am Ort des Fingers und im näheren Bereich der Zeichen. Somit kann der Benutzer die Position seines Fingers und die des Löschzeichens gleichzeitig sehen.

Das Dokument EP2660699A1 beschreibt eine für einen Touchscreen ausgelegte

Tastatur, welche eine Korrekturmöglichkeit für zuvor eingegebene Zeichen beinhaltet, welche in einem Eingabefeld des Touchscreens dargestellt werden. Ein Löschvorgang kann durch eine Berührungsgeste in Verbindung mit einer dafür vorgesehenen Taste der Touchscreentastatur durchgeführt werden.

Das Dokument US2010/0313158A1 offenbart eine Methode für mobile Geräte bei der eingegebene Daten durch bestimmte Berührungsgesten mit auf einem Bildschirm dargestellten Elementen zurückgenommen oder wiederhergestellt werden können. Dies kann durch die Verschiebung eines Steuersymbols auf einer Fortschrittsanzeige oder die Drehung eines Rads erfolgen. Dabei kann das entsprechende Gerät über einen einzigen oder auch mehrere Bildschirme verfügen.

Insbesondere in einem Kraftfahrzeug ist es hierbei schwierig, mehrere Zeichen durch Gedrückt-Halten der Löschtaste zu löschen. Wird die Bedienvorrichtung durch den Fahrer bedient, muss dieser hierzu nämlich seinen Blick vom Verkehrsgeschehen abwenden, um das Eingabefeld beobachten zu können. Ansonsten ist dem Fahrer nicht klar, wann er die Löschtaste loslassen muss, um den Löschvorgang zu beenden.

Der Erfindung liegt die Aufgabe zugrunde, bei einer Bedienvorrichtung mit Zeicheneingabe einen Löschvorgang mehrerer Zeichen für den Benutzer steuerbar zu machen.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung ist eine Bedienvorrichtung bereitgestellt, die insbesondere für ein Kraftfahrzeug vorgesehen ist. Die Bedienvorrichtung umfasst in der beschriebenen Weise eine Eingabeeinrichtung zum Empfangen einer Zeicheneingabe eines Benutzers sowie eine Anzeigeeinrichtung zum Anzeigen von durch die Zeicheneingabe eingegebenen Zeichen in einem Eingabefeld. Zum Löschen von zumindest einem in dem Eingabefeld angezeigten Zeichen ist eine Löscheinrichtung bereitgestellt, die das zumindest eine Zeichen in einem Löschvorgang löscht. Dabei ist die Löscheinrichtung dazu eingerichtet, bei dem Löschvorgang in dem Eingabefeld ein Löschelement nacheinander über jeweils eines der angezeigten Zeichen zu bewegen und dieses Zeichen dabei jeweils zu löschen oder zumindest für ein am Ende des Löschvorganges durchzuführendes Löschen zu markieren.

Um nun dem Benutzer eine Steuermöglichkeit für das Löschelement bereitzustellen, ist die Löscheinrichtung dazu eingerichtet, bei dem Löschvorgang an zumindest einem berührungssensitiven Berührfeld eine Gleitbewegung eines Fingers des Benutzers zu erfassen. Eine andere Bezeichnung für berührungssensitives Berührfeld ist auch Touchpad. Das Touchpad kann auch an einem Bildschirm bereitgestellt sein, so dass sich insgesamt ein Touchscreen oder Berührbildschirm ergibt. Die Löscheinrichtung ist des Weiteren dazu eingerichtet, die Bewegung des Löschelements in Abhängigkeit von der erfassten Gleitbewegung zu steuern. Die Gleitbewegung ergibt sich, indem der Benutzer mit dem Finger durchgehend das zumindest eine Berührfeld berührt und hierbei den Finger entlang der berührungssensitiven Oberfläche bewegt oder gleitet. Die Gleitbewegung stellt somit eine Abfolge von Berührpunkten oder Berührkoordinaten dar, die eine jeweilige Berührstelle oder einen jeweiligen Berührort des Fingers an dem zumindest einen berührungssensitiven Berührfeld beschreiben. In Abhängigkeit von einer Veränderung der Berührstelle oder des Berührorts durch die Gleitbewegung, wird entsprechend auch die Position des Löschelements in dem Eingabefeld verändert. Somit wird in Abhängigkeit von einer Gleitweglänge der Gleitbewegung des Fingers entlang des Berührfelds eingestellt, über wie viele der angezeigten Zeichen das Löschelement bewegt wird. Hält der Benutzer den Finger an, wird entsprechend auch das Löschelement angehalten und damit nicht weiter bewegt. Der Löschvorgang beginnt also mit Beginn der erfassten Gleitbewegung, indem das Löschelement ausgehend von einer Anfangsstellung, die es zu Beginn des Löschvorganges innehat, in Abhängigkeit von der Gleitbewegung in dem Eingabefeld über die angezeigten Zeichen bewegt wird.

Durch die Erfindung ergibt sich der Vorteil, dass ein Benutzer in Abhängigkeit von seiner Fingerstellung, die er mittels der Gleitbewegung verändert, einstellt, welche der angezeigten Zeichen gelöscht werden. Selbst wenn der Benutzer also nicht das Eingabefeld betrachtet, kann er allein durch Einstellen seiner Fingerposition festlegen, wie weit das Löschelement in dem Eingabefeld bewegt wird. Durch Unterbrechen der Gleitbewegung kann sich der Benutzer dabei auch beispielsweise auf den Verkehr konzentrieren und anschließend wieder die Gleitbewegung fortsetzen. Hierdurch kann er das Löschelement gezielt und/oder planmäßig über die zu löschenden Zeichen führen. Indem mittels der Gleitbewegung das Löschelement über mehrere Zeichen geführt oder bewegt werden kann, ist auch ein effizientes Löschen mehrerer Zeichen ermöglicht. Bei der erfindungsgemäßen Bedienvorrichtung kann die Löscheinrichtung beispielsweise durch ein Programmmodul realisiert sein, das durch eine Prozessoreinrichtung der Bedienvorrichtung ausgeführt wird. Die Prozessoreinrichtung kann beispielsweise auf der Grundlage eines Mikrocontrollers oder Mikroprozessors realisiert sein. Die Eingabeeinrichtung kann beispielsweise als Tastatur und/oder Spracherkennungseinrichtung ausgestaltet sein. Die Anzeigeeinrichtung kann in an sich bekannter Weise einen Bildschirm zum Anzeigen einer Pixelgrafik aufweisen, mittels welchem die Zeichen und das Eingabefeld als Grafikelemente dargestellt werden. Ein berührungssensitives Berührfeld kann z.B. auf der Grundlage einer Sensormatrix gebildet sein. Die Sensoren der Sensormatrix können z.B. jeweils als kapazitiver Sensor ausgestaltet sein.

Zu der Erfindung gehören auch optionale Weiterbildungen, durch deren Merkmale sich zusätzliche Vorteile ergeben.

Eine Weiterbildung betrifft das Festlegen des Beginns des Löschvorganges. Bei dieser Weiterbildung ist die Löscheinrichtung dazu ausgelegt, eine Gleitweglänge der Gleitbewegung ausgehend von einem berührungsinsensitiven Rand des zumindest einen Berührfelds zu ermitteln und in Abhängigkeit von der Gleitweglänge einzustellen, über wie viele der angezeigten Zeichen das Löschelement bewegt wird. Mit anderen Worten muss der Benutzer von dem Rand des zumindest einen Berührfelds aus mit dem Finger in das Berührfeld hineingleiten. Durch diese Weiterbildung ergibt sich der Vorteil, dass die Gleitbewegung zum Löschen der Zeichen daran erkannt wird, dass sie am Rand des zumindest einen Berührfelds beginnt. Hierdurch kann in vorteilhafter Weise das zumindest eine Berührfeld auch zum Erkennen anderer Gleitbewegungen zum Beispiel zum Steuern eines Zeigers oder Cursors, genutzt werden.

Eine alternative Weiterbildung sieht vor, dass die Gleitweglänge ausgehend von einem Anfangspunkt der Gleitbewegung ermittelt wird. Hierdurch ergibt sich der Vorteil, dass der Benutzer die Gleitbewegung auch innerhalb des zumindest einen Berührfelds beginnen kann. Beispielsweise kann in dem Berührfeld ein Teilbereich als Bedienbereich abgegrenzt sein, innerhalb welchem der Benutzer die Gleitbewegung beginnen und/oder ausführen muss, damit die Gleitbewegung als Bedienung der Löscheinrichtung erkannt oder akzeptiert wird.

Wie bereits ausgeführt, kann es sich bei dem zumindest einen Berührfeld jeweils beispielsweise um ein Touchpad handeln, das heißt eine berührungssensitive Oberfläche, die beispielsweise durch eine Folie gebildet sein kann. Bevorzugt ist allerdings vorgesehen, dass das zumindest eine Berührfeld jeweils durch eine Touchscreen oder Berührbildschirm gebildet oder bereitgestellt ist. Bei dieser Weiterbildung ist vorgesehen, dass die Anzeigeeinrichtung und/oder die Eingabeeinrichtung jeweils einen Berührbildschirm (Touchscreen) aufweist und das zumindest eine Berührfeld durch eine jeweilige berührungssensitive Anzeigefläche des jeweiligen Berührbildschirms bereitgestellt ist. Indem als Berührfeld die berührungssensitive Anzeigefläche der Anzeigeeinrichtung umfasst ist, ergibt sich der Vorteil, dass der Benutzer die Gleitbewegung über und/oder neben dem Eingabefeld ausführen kann und hierdurch die Fingerposition unmittelbar mit der Bewegung und/oder Position des Löschelements der Löscheinrichtung korreliert werden kann. Indem eine berührungssensitive Anzeigefläche der Eingabeeinrichtung als Berührfeld genutzt wird, ergibt sich der Vorteil, dass der Benutzer nach dem Eingeben der Zeichen mit dem Finger unmittelbar an der Eingabeeinrichtung selbst die Gleitbewegung ausführen kann.

Im Zusammenhang mit einer Eingabeeinrichtung, die einen Berührbildschirm aufweist, ist eine Weiterbildung vorgesehen, bei welcher die Eingabeeinrichtung einen Berührbildschirm mit einer Touchscreen-Tastatur aufweist, das heißt einer grafischen Darstellung einer Tastatur. Tasten der Tastatur können durch Berühren des Berührbildschirms bedient werden. Die Löscheinrichtung ist bei dieser Weiterbildung dazu eingerichtet, eine sich über mehrere Tasten der Touchscreen-Tastatur erstreckende Wischbewegung des Fingers als die Gleitbewegung zum Löschen zu erkennen. Hierdurch ist es in vorteilhafter Weise möglich, den Anzeigenbereich oder Darstellungsbereich der Tasten der Touchscreen-Tastatur auch zum Erfassen der Gleitbewegung zu nutzen. Zusätzlich oder alternativ dazu kann vorgesehen sein, dass die Touchscreen-Tastatur eine spezifische Löschtaste aufweist. Durch Antippen der Löschtaste kann dann in der aus dem Stand der Technik bekannten Weise das Löschelement jeweils um ein Zeichen bewegt werden. Durch Gedrückt-Halten der Löschtaste kann das Löschelement in der aus dem Stand der Technik bekannten Weise automatisiert über mehrere Zeichen bewegt werden. Es ist zusätzlich oder alternativ vorgesehen, dass im Anzeigebereich und/oder ausgehend von dem Anzeigebereich, die Gleitbewegung erkannt wird.

Eine Weiterbildung betrifft das Erkennen des Endes des Löschvorganges. Diese Weiterbildung sieht vor, dass die Löscheinrichtung dazu eingerichtet ist, den Löschvorgang durch endgültiges Löschen des zumindest einen angezeigten Zeichens, über welches das Löschelement bewegt worden ist, zu beenden, falls nach der erfassten Gleitbewegung der Finger von dem zumindest einen Berührfeld gelöst ist. Mit anderen Worten wird bei Erkennen eines Abhebens oder Entfernens des Fingers von dem zumindest einen Berührfeld der Löschvorgang beendet. Dies kann im Falle der Markierung der zu löschenden Zeichen bedeuten, dass das Löschen der markierten Zeichen durchgeführt wird.

Eine Weiterbildung nutzt die Möglichkeit, dass der Benutzer beim Ausführen der Gleitbewegung die Gleitrichtung oder Bewegungsrichtung des Fingers entlang des zumindest einen Berührfelds umkehren kann. Bei dieser Weiterbildung ist vorgesehen, dass die Löscheinrichtung dazu eingerichtet ist, ein gelöschtes Zeichen wiederherzustellen oder die Markierung eines zum Löschen markierten Zeichens aufzuheben, falls das Löschelement mittels der Gleitbewegung in dem Eingabefeld zur Ausgangsstellung zurück bewegt wird. Die Ausgangsstellung ist diejenige Position des Löschelements, die das Löschelement zu Beginn des Löschvorganges, das heißt zu Beginn der erfassten Gleitbewegung, aufweist. Durch diese Weiterbildung ergibt sich der Vorteil, dass der Benutzer während des Löschvorganges das Löschelement auch wieder zurück bewegen kann. Hierdurch werden gelöschte Zeichen oder zum Löschen markierte Zeichen wieder vor dem Löschen bewahrt.

Eine Weiterbildung betrifft das Positionieren des Löschelements für einen Zeitraum außerhalb des Löschvorganges, wenn also kein Löschvorgang durchgeführt wird. Bei dieser Weiterbildung ist die Löscheinrichtung dazu eingerichtet, nach dem Löschvorgang das Löschelement an einem Rand des Eingabefelds monostabil zu halten. Mit anderen Worten schnappt das Löschelement oder bewegt sich das Löschelement nach dem Löschvorgang zu dem Rand des Eingabefelds hin. Hierdurch ist in vorteilhafter Weise die Richtung der Gleitbewegung zum Durchführen des nächsten Löschvorgangs festgelegt. Der Benutzer muss dann mittels der Gleitbewegung diejenige Richtung wählen, durch welche das Löschelement zu den anzeigten Zeichen hin bewegt wird.

Alternativ zum Positionieren am Rand des Eingabefeldes ist vorgesehen, das Löschelement neben dem jeweils zuletzt eingegebenen Zeichen anzuzeigen und das Löschelement bei Eingabe eines weiteren Zeichens mit einem Rand der Reihe der angezeigten Zeichen mit zu bewegen. Das Löschelement weist also die aktuelle Position des Eingabecursors auf. Durch diese Weiterbildung ergibt sich der Vorteil, dass das Löschelement unmittelbar neben dem zuerst zu löschenden Zeichen angeordnet ist, nämlich dem zuletzt eingegebenen Zeichen. Hierdurch kann mit einem kurzen Gleitweg der Gleitbewegung bereits das zuletzt eingegebene Zeichen erreicht und gelöscht werden.

Eine Weiterbildung betrifft eine Ausführungsform in der Bedienvorrichtung, bei welcher sowohl die Anzeigeeinrichtung als auch die Eingabeeinrichtung jeweils einen eigenen Berührbildschirm aufweist. Bei dieser Weiterbildung ist die Löschvorrichtung dazu eingerichtet, während des Löschvorgangs einen aktuellen Berührort oder eine aktuelle Berührstelle des Fingers an dem Berührbildschirm der Eingabevorrichtung mit dem auf der Anzeigevorrichtung dargestellten Löschelement optisch durch Linien zu verbinden. Hierdurch ergibt sich der Vorteil, dass die Anzeigeeinrichtung und die Eingabeeinrichtung durch zwei voneinander beabstandete Berührbildschirme realisiert werden können und hierbei dennoch eine darstellungstechnische Kopplung der Gleitbewegung mit dem Löschelement ermöglicht ist. Eine Alternative dieser Weiterbildung sieht vor, dass die Anzeigeeinrichtung keinen Berührbildschirm, sondern lediglich einen berührungsinsensitiven Bildschirm aufweist.

Wie bereits ausgeführt, gehört zu der Erfindung auch ein Kraftfahrzeug. Das erfindungsgemäße Kraftfahrzeug weist ein Fahrzeuggerät sowie eine Ausführungsform der erfindungsgemäßen Bedienvorrichtung auf. Die Bedienvorrichtung ist zum Bedienen des Fahrzeuggeräts mit diesem gekoppelt. Zur Bedienung des Fahrzeuggeräts ist die Bedienvorrichtung dazu ausgelegt, ein Steuersignal zum Steuern des Fahrzeuggeräts in Abhängigkeit von den eingegebenen Zeichen zu erzeugen.

Schließlich gehört zu der Erfindung auch ein Verfahren zum Betreiben einer Bedienvorrichtung. Bei dem Verfahren wird durch eine Eingabeeinrichtung eine Zeicheneingabe eines Benutzers empfangen, durch eine Anzeigeeinrichtung die empfangenen Zeichen in einem Eingabefeld angezeigt und durch eine Löscheinrichtung zumindest ein in dem Eingabefeld angezeigtes Zeichen mittels eines Löschvorgangs gelöscht, wobei die Löscheinrichtung bei dem Löschvorgang in dem Eingabefeld ein Löschelement nacheinander über jeweils eines der angezeigten Zeichen bewegt und dieses dabei jeweils löscht oder für ein am Ende des Löschvorgangs durchzuführendes Löschen markiert. Des Weiteren wird durch die Löscheinrichtung bei dem Löschvorgang an zumindest einem berührungssensitiven Berührfeld eine Gleitbewegung eines Fingers eines Benutzers erfasst und die Bewegung des Löschelements in Abhängigkeit von der Gleitbewegung gesteuert.

Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Bedienvorrichtung beschrieben worden sind. Aus diesem Grund sind die entsprechenden Weiterbildungen des erfindungsgemäßen Verfahren hier nicht noch einmal beschrieben.

Das erfindungsgemäße Kraftfahrzeug ist bevorzugt als Kraftwagen, insbesondere als Personenkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs; und
- Fig. 2: das Kraftfahrzeug von Fig. 1 während eines Löschvorgangs, der durch eine Löscheinrichtung durchgeführt wird.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

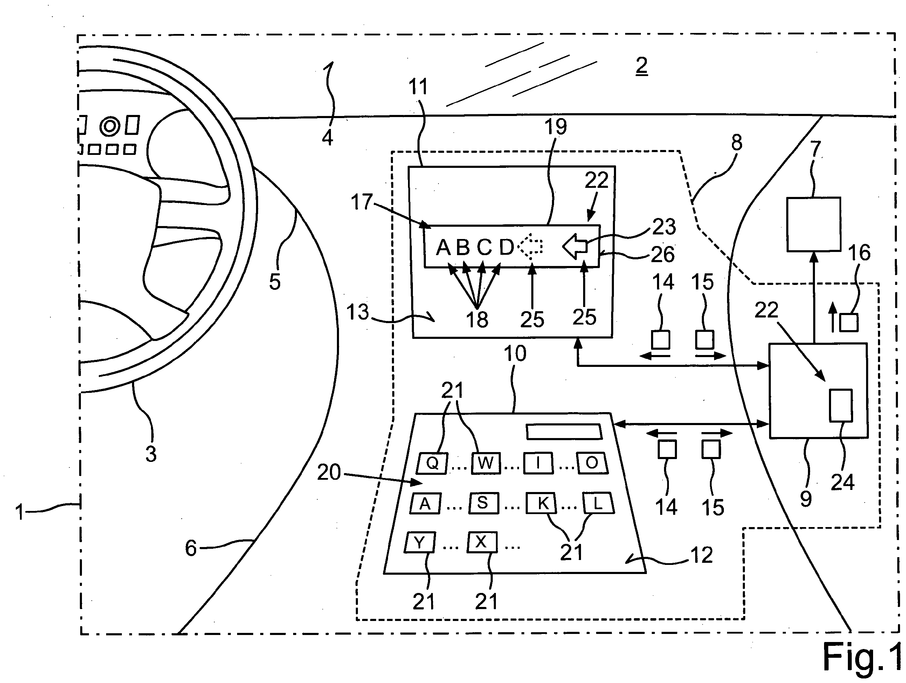

Fig. 1 zeigt von einem Kraftfahrzeug 1 einen Fahrgastraum oder Fahrzeuginnenraum 2. Bei dem Kraftfahrzeug 1 kann es sich beispielsweise um einen Kraftwagen, insbesondere einen Personenkraftwagen, handeln. Gezeigt sind ein Lenkrad 3, eine Windschutzscheibe oder Frontscheibe 4, ein Armaturenbrett 5, eine Mittelkonsole 6, ein Fahrzeuggerät 7 und eine Bedienvorrichtung 8 für das Fahrzeuggerät 7. Bei dem Fahrzeuggerät 7 kann es sich beispielsweise um ein Infotainmentsystem (Information-Unterhaltungssystem) handeln. Bei dem Fahrzeuggerät 7 kann es sich auch beispielsweise um ein Navigationsgerät oder ein Telefon handeln.

Die Bedienvorrichtung 8 kann eine Steuereinrichtung 9 und beispielsweise zwei Touchscreens oder Berührbildschirme 10, 11 aufweisen. Jeder Berührbildschirm 10, 11 weist eine berührungssensitive Anzeigefläche 12, 13 auf. Die berührungssensitiven Anzeigeflächen (12, 13) stellen jeweils ein berührungssensitives Berührfeld dar. Die Steuereinrichtung 9 kann beispielsweise auf der Grundlage eines Mikrocontrollers oder Mikroprozessors realisiert sein.

Zum Einstellen oder Festlegen eines Anzeigeinhalts der jeweiligen Anzeigefläche 12, 13 erzeugt die Steuereinrichtung 9 Grafikdaten 14, mittels welchen die Steuereinrichtung 9 den jeweiligen Berührbildschirm 10, 11 steuert. Beim Berühren der berührungssensitiven Anzeigefläche 12, 13 durch einen (nicht dargestellten) Benutzer erzeugt jeder Berührbildschirm 10, 11 jeweils Koordinatendaten oder Berührdaten 15, welche in an sich bekannter Weise den Berührort der Berührung auf der Anzeigefläche 12, 13 beschreiben. Die Steuervorrichtung 9 erzeugt in Abhängigkeit von den Berührdaten 15 ein Steuersignal 16 zum Steuern des Fahrzeuggeräts 7.

Mittels der Bedienvorrichtung 8 kann der Benutzer eine Zeichenreihe 17 aus Zeichen 18 eingeben. Bei jedem Zeichen 18 der Zeichenreihe 17 kann es sich beispielsweise jeweils um einen Buchstaben oder eine Zahl oder ein Satzzeichen handeln. Beispielsweise kann der Benutzer einen Ortsnamen zum Festlegen eines Navigationsziels als Zeichenreihe eingeben. Hierzu stellt der Berührbildschirm 10 eine Eingabeeinrichtung dar. Der Berührbildschirm 11 stellt eine Anzeigeeinrichtung dar. Mit anderen Worten repräsentiert der Berührbildschirm 10 die Eingabeeinrichtung und der Berührbildschirm 11 die Anzeigeeinrichtung.

Über den Berührbildschirm 11 wird durch die Steuereinrichtung 9 ein Eingabefeld 19 dargestellt oder angezeigt, in welchem die eingegebenen Zeichen 18 angezeigt oder dargestellt werden. Auf dem Berührbildschirm 10 wird durch die Steuereinrichtung 9 eine Touchscreen-Tastatur oder kurz Tastatur 20 angezeigt oder dargestellt. Durch Berühren der angezeigten Tasten 21 der Tastatur 20 kann der Benutzer die Zeichen 18 eingeben. Von den Tasten 21 sind der Übersichtlichkeit halber in den Fig. nur einige mit einem Bezugszeichen versehen.

Falls der Benutzer beim Eingeben der Zeichen 18 einen Fehler macht und/oder die Zeichenreihe 17 korrigieren möchte, kann er dies mittels einer Löscheinrichtung 22 der Bedienvorrichtung 8 durchführen. Von der Löscheinrichtung 22 sind in Fig. 1 ein Löschelement 23 und eine Löschsteuerung 24 dargestellt. Die Löschsteuerung 24 kann als Programmmodul der Steuereinrichtung 9 realisiert sein. Das Löschelement 23 kann als ein Löschzeichen oder Löschschieber grafisch dargestellt sein. Das Löschelement 23 kann im unbetätigten Zustand der Löscheinrichtung 22, wenn der Benutzer also keines der Zeichen 18 löschen möchte, eine Ausgangsstellung 25 aufweisen, die beispielsweise an einem Rand 26 des Eingabefelds 19 vorgesehen ist. Alternativ dazu kann das Löschelement 23 in einer Ausgangsstellung 25' angeordnet sein, die sich unmittelbar neben dem zuletzt eingegebenen Zeichen (in Fig. 1 ist dies das Zeichen D) befinden kann.

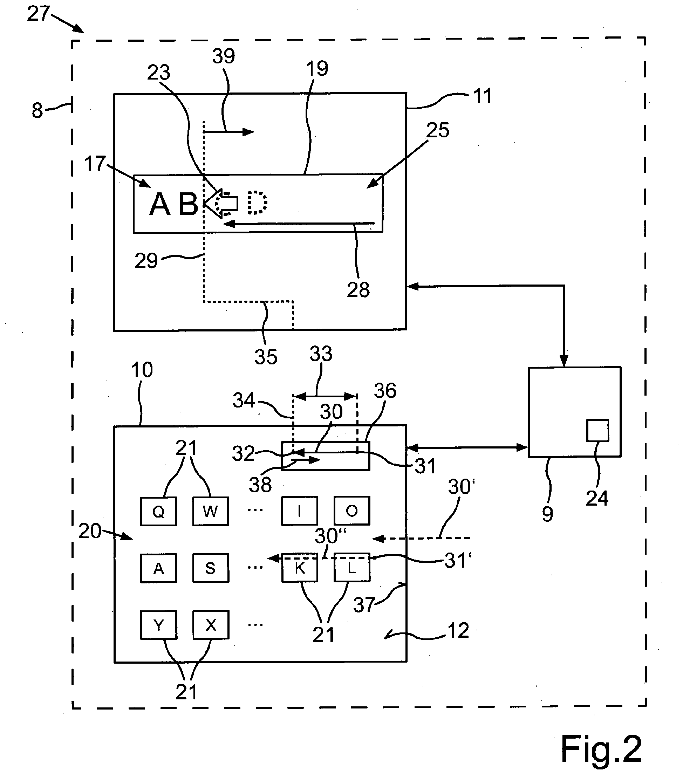

Durch die Löschsteuerung 24 wird der im Folgenden anhand von Fig. 2 veranschaulichte Löschvorgang 27 gesteuert.

Fig. 2 veranschaulicht, wie das Löschelement 23 ausgehend von der Ausgangsstellung 25 nacheinander über die beiden zuletzt eingegebenen Zeichen C, D in einer Löschbewegung 28 bewegt worden ist. Es kann vorgesehen sein, dass hierdurch die Zeichen C, D in dem Eingabefeld 19 gelöscht werden. Alternativ dazu kann vorgesehen sein, dass die Zeichen C, D zum Löschen markiert werden. Der zu löschende Teil der Zeichenkette 17 kann beispielsweise durch eine Löschlinie 29 markiert sein, die angibt, welcher Teil der Zeichenkette 17 am Ende des Löschvorgangs 27 gelöscht werden wird. Die Löschbewegung 28 kann beispielsweise als Animation des Löschelements 23 visualisiert oder veranschaulicht werden. Es kann auch nur die Löschlinie 29 ohne das Löschelement 23 angezeigt werden.

Zum Steuern der Löschbewegung 23 führt der Benutzer mit einem Finger an der Anzeigefläche 12 eine Wischbewegung oder Gleitbewegung 30 aus. Die Gleitbewegung 30 beginnt an einem Anfangspunkt 31 und endet an einem aktuellen Berührort 32 des Fingers an der Anzeigefläche 12. Eine Gleitweglänge 33 der Gleitbewegung 30, so beispielsweise der Abstand zwischen dem Anfangspunkt 31 und dem Berührort 32, legt fest, wie weit das Löschelement 23 von der Ausgangsstellung 25 weg bewegt wird. Dies legt fest, wie viele der Zeichen 18 der Zeichenkette 17 gelöscht werden. Mit anderen Worten wird die Position der Löschlinie 29 festgelegt. Zur Veranschaulichung des Zusammenhangs können Orientierungslinien oder kurz Linien 34, 35 vorgesehen sein, durch welche eine Verbindung zwischen der aktuellen Position des Löschelements 23 und des Berührorts 32 angezeigt ist.

Zum Erfassen der Gleitbewegung 30 kann ein Löschfeld 36 in der Tastatur 20 vorgesehen sein. Das Löschfeld 36 kann auch beispielsweise die Funktion einer Löschtaste aufweisen, bei welcher durch Antippen das Löschelement 23 jeweils um ein Zeichen 18 weiter bewegt wird.

Zusätzlich oder alternativ dazu kann vorgesehen sein, dass die Gleitbewegung 30 ausgehend von einem Rand 37 der berührungssensitiven Anzeigenfläche 12 erfasst wird. Hierdurch ergibt sich eine alternative Gleitbewegung 30'. Es kann auch vorgesehen sein, dass eine Gleitbewegung 30" zum Steuern oder Bewegen des Löschelements 23 dann erkannt wird, falls der Benutzer mit dem Finger ausgehend von einem alternativen Anfangspunkt 31' die Gleitbewegung 30" über mehr als eine Taste 21, also beispielsweise über zwei Tasten oder mehr als zwei Tasten, durchführt.

Ein weiterer Vorteil der Steuerung der Löschbewegung 28 mittels der Gleitbewegung 30, 30', 30" ist, dass auch eine Umkehrbewegung 38 beim Gleiten üblich ist und hierdurch das Löschelement 23 eine Rückbewegung 39 zur Ausgangsstellung 25 hin durchführt. Hierdurch werden dann die jeweils schon gelöschten Zeichen C, D oder zum Löschen markierten Zeichen C, D wiederhergestellt, so dass die Löschung rückgängig gemacht wird beziehungsweise nicht erfolgt.

Der Löschvorgang 27 wird durch die Löschsteuerung 24 als beendet erkannt, falls der Benutzer seinen Finger von der berührungssensitiven Anzeigefläche 12 löst. Falls eine Markierung der zu löschenden Zeichen C, D vorgesehen ist, so werden diese Zeichen bei Beenden des Löschvorgangs 27 endgültig gelöscht.

Das Löschelement 23 wirkt also wie ein Löschschieber, den der Benutzer mit dem Finger durch eine Touchbedienung oder Berührbedienung bedienen oder bewegen kann. Das Löschen kann beispielsweise von rechts bis zu einem Zielzeichen erfolgen, indem man das Löschelement 23 von rechts in die Textzeile des Eingabefelds 25 hineinzieht und nach Überstreichen oder Überziehen des zu löschenden Bereichs, das heißt der zu löschenden Zeichen 18, loslässt. Das Löschelement 23 steht neben dem Text oder der Zeichenreihe 17. Dadurch wird ersichtlich, ab wo gelöscht wurde. Alternativ kann durch die Löschlinie 29 angezeigt werden, bis wohin gelöscht wird. Insbesondere erscheint der gelöschte Text auch wieder, wenn nicht losgelassen wird, sondern das Löschelement einfach wieder zurückgezogen wird über das bereits gelöschte Zeichen. Die Löschlinie 29 kann als Animation entsprechend der Fingerbewegung und/oder Fingerposition über die gesamte Anzeigefläche 13 als senkrechte Linie dargestellt sein. Bevorzugt erfolgt auch eine Fingerspuranzeige, das heißt die Gleitbewegungen 30, 30', 30" werden auf der Anzeigefläche 12 grafisch visualisiert.

Für den Benutzer ergibt sich insgesamt eine vereinfachte und/oder intuitive Bedienbarkeit. Insbesondere ist die Bedienung vereinfacht bei langen Worten. Zudem ist die Ablenkung des Fahrers verringert, da dieser mit dem Finger auf der im Berührbildschirm 10 am aktuellen Berührort 32 verharren kann, während er einen Kontrollblick auf die Straße wirft.

Insgesamt zeigt das Beispiel, wie durch die Erfindung das Löschen in einem Eingabefeld mittels eines Löschschiebers realisiert werden kann.

## Patentansprüche

1. Bedienvorrichtung (8), aufweisend:
- eine Eingabeeinrichtung (10) zum Empfangen einer Zeicheneingabe eines Benutzers,
- eine Anzeigeeinrichtung (11) zum Anzeigen von eingegebenen Zeichen (18) in einem Eingabefeld (19),
- eine Löscheinrichtung (22) zum Löschen von zumindest einem in dem Eingabefeld (19) angezeigten Zeichen (18) mittels eines Löschelements (23) in einem Löschvorgang (27), wobei die Löscheinrichtung (22) dazu eingerichtet ist, bei dem Löschvorgang (27) in dem Eingabefeld (19) das Löschelement (23) nacheinander über jeweils eines der angezeigten Zeichen (18) zu bewegen und dieses dabei jeweils zu löschen oder für ein am Ende des Löschvorganges (27) durchzuführendes Löschen zu markieren, wobei
die Löscheinrichtung (22) dazu eingerichtet ist, bei dem Löschvorgang (27) an zumindest einem berührungssensitiven Berührfeld (12) eine Gleitbewegung (30, 30', 30") eines Fingers eines Benutzers zu erfassen und die Bewegung (28, 39) des Löschelements (23) in Abhängigkeit von der erfassten Gleitbewegung (30, 30', 30") zu steuern, wobei die Eingabeeinrichtung (10) einen von der Anzeigeeinrichtung (11) verschiedenen eigenen Berührbildschirm (10) aufweist oder die Eingabeeinrichtung (10) einen eigenen Berührbildschirm (10) aufweist und die Anzeigeeinrichtung (11) einen berührungsinsensitiven Bildschirm aufweist,
wobei das zumindest eine Berührfeld (11, 12) durch eine jeweilige berührungssensitive Anzeigefläche (11, 12) des jeweiligen Berührbildschirms (10, 11) bereitgestellt ist
und die Bedienvorrichtung **dadurch gekennzeichnet ist, dass**
die Löscheinrichtung (22) dazu eingerichtet ist, während des Löschvorganges (27) einen aktuellen Berührort (32) des Fingers an dem Berührbildschirm (10) der Eingabeeinrichtung (10) mit dem auf der Anzeigeeinrichtung (11) dargestellten Löschelement (23) optisch durch Linien (34, 35) zu verbinden.

2. Bedienvorrichtung (8) nach Anspruch 1, wobei die Löscheinrichtung (22) dazu ausgelegt ist, eine Gleitweglänge (33) der Gleitbewegung (30, 30', 30") ausgehend von einem berührungsinsensitiven Rand (37) des zumindest einen Berührfelds (12) oder ausgehend von einem Anfangspunkt (31, 31') der Gleitbewegung (30, 30") zu ermitteln und in Abhängigkeit von der Gleitweglänge (33) einzustellen, über wie viele der angezeigten Zeichen (18) das Löschelement (23) bewegt wird.

3. Bedienvorrichtung (8) nach einem der vorhergehenden Ansprüche, wobei die Eingabeeinrichtung (10) einen Berührbildschirm (10) mit einer Touchscreen-Tastatur (20) aufweist und die Löscheinrichtung (22) dazu eingerichtet ist, eine sich über mehrere Tasten (21) der Touchscreen-Tastatur (20) erstreckende Wischbewegung (30") des Fingers als die Gleitbewegung (30") zu erkennen.

4. Bedienvorrichtung (8) nach einem der vorhergehenden Ansprüche, wobei die Löscheinrichtung (22) dazu eingerichtet ist, den Löschvorgang (27) durch endgültiges Löschen des zumindest einen angezeigten Zeichen (18) zu beenden, falls nach der erfassten Gleitbewegung (30, 30', 30") der Finger von dem zumindest einen Berührfeld (12) gelöst ist.

5. Bedienvorrichtung (8) nach einem der vorhergehenden Ansprüche, wobei die Löscheinrichtung (22) dazu eingerichtet ist, ein gelöschtes Zeichen (C, D) wieder herzustellen oder die Markierung (29) eines zum Löschen markierten Zeichens (C, D) aufzuheben, falls das Löschelement (23) in dem Eingabefeld (19) mittels der Gleitbewegung (38) zu einer Ausgangsstellung (25), die das Löschelement (23) zu Beginn des Löschvorganges (27) aufweist, zurückbewegt wird.

6. Bedienvorrichtung (8) nach einem der vorhergehenden Ansprüche, wobei die Löscheinrichtung (22) dazu eingerichtet ist, nach dem Löschvorgang (27) das Löschelement (23) an einem Rand (26) des Eingabefelds (19) monostabil zu halten oder neben dem jeweils zuletzt eingegebenen Zeichen (D) anzuzeigen und das Löschelement (23) bei Eingabe eines weiteren Zeichens mit einem Rand der Reihe (17) der angezeigten Zeichen (18) mitzubewegen.

7. Kraftfahrzeug (1) mit einem Fahrzeuggerät (7) und einer Bedienvorrichtung (8) nach einem der vorhergehenden Ansprüche, wobei die Bedienvorrichtung (8) zum Bedienen des Fahrzeuggeräts (7) mit diesem gekoppelt ist.

8. Verfahren zum Betreiben einer Bedienvorrichtung (8), wobei durch eine Eingabeeinrichtung (10) eine Zeicheneingabe eines Benutzers empfangen wird, durch eine Anzeigeeinrichtung (11) durch die Zeicheneingabe eingegebene Zeichen (18) in einem Eingabefeld (19) angezeigt werden und durch eine Löscheinrichtung (22) zumindest ein in dem Eingabefeld (19) angezeigtes Zeichen (18) mittels eines Löschvorgangs (27) gelöscht wird, wobei die Löscheinrichtung (22) bei dem Löschvorgang (27) in dem Eingabefeld (19) das Löschelement (23) nacheinander über jeweils eines der angezeigten Zeichen (18) bewegt und dieses dabei jeweils löscht oder für ein am Ende des Löschvorganges (27) durchzuführendes Löschen markiert, wobei
durch die Löscheinrichtung (22) bei dem Löschvorgang (27) an zumindest einem berührungssensitiven Berührfeld (12) eine Gleitbewegung (30, 30', 30") eines Fingers eines Benutzers erfasst und die Bewegung (28, 39) des Löschelements (23) in Abhängigkeit von der Gleitbewegung (30, 30', 30") gesteuert wird, wobei die Eingabeeinrichtung (10) einen von der Anzeigeeinrichtung (11) verschiedenen eigenen Berührbildschirm (10) aufweist oder die Eingabeeinrichtung (10) einen eigenen Berührbildschirm (10) aufweist und die Anzeigeeinrichtung (11) einen berührungsinsensitiven Bildschirm aufweist,
wobei das zumindest eine Berührfeld (11, 12) durch eine jeweilige berührungssensitive Anzeigefläche (11, 12) des jeweiligen Berührbildschirms (10, 11) bereitgestellt ist
und das Verfahren **dadurch gekennzeichnet ist, dass** die Löscheinrichtung (22) während des Löschvorganges (27) einen aktuellen Berührort (32) des Fingers an dem Berührbildschirm (10) der Eingabeeinrichtung (10) mit dem auf der Anzeigeeinrichtung (11) dargestellten Löschelement (23) optisch durch Linien (34, 35) verbindet.

## Claims

1. Operating device (8), having:
- an input device (10) for receiving a character input of a user,
- a display device (11) for displaying inputted characters (18) in an input field (19),
- a delete device (22) for deleting at least one character (18) displayed in the input field (19) using a delete element (23) in a delete procedure (27), wherein the delete device (22) is designed in the course of the delete procedure (27) to move in the input field (19) the delete element (23) over respectively one of the displayed characters (18) after one another and in this context respectively to delete said character or to mark it for a deleting to be carried out at the end of the delete procedure (27), wherein
the delete device (22) is designed in the course of the delete procedure (27) to detect at at least one touch-sensitive touch field (12) a sliding movement (30, 30', 30") of a finger of a user and to control the movement (28, 39) of the delete element (23) depending on the detected sliding movement (30, 30', 30"),
wherein
the input device (10) has an own touchscreen (10) different from the display device (11) or
the input device (10) has an own touchscreen (10) and the display device (11) has a non-touch-sensitive screen,
wherein
the at least one touch field (11, 12) is provided by a respective touch-sensitive display surface (11, 12) of the respective touchscreen (10, 11)
and the operating device is **characterised in that**
the delete device (22) is designed, during the delete procedure (27) to connect optically using lines (34, 35) an actual touch location (32) of the finger on the touchscreen (10) of the input device (10) with the delete element (23) shown on the display device (11).

2. Operating device (8) according to claim 1, wherein the delete device (22) is designed to identify a slide path length (33) of the sliding movement (30, 30', 30") starting from a non-touch-sensitive edge (37) of the at least one touch field (12) or starting from a start point (31, 31') of the sliding movement (30, 30") and depending on the slide path length (33) to specify over how many of the displayed characters (18) the delete element (23) is moved.

3. Operating device (8) according to any of the preceding claims, wherein the input device (10) has a touchscreen (10) with a touchscreen keyboard (20) and the delete device (22) is designed to recognise a wiping movement (30") of the finger extending over several buttons (21) of the touchscreen keyboard (20) as the sliding movement (30").

4. Operating device (8) according to any of the preceding claims, wherein the delete device (22) is designed to end the delete procedure (27) through final deleting of the at least one displayed character (18), in the case that after the detected sliding movement (30, 30', 30") the finger is released from the at least one touch field (12).

5. Operating device (8) according to any of the preceding claims, wherein the delete device (22) is designed to restore a deleted character (C, D) or to remove the marking (29) of a character (C, D) marked for deletion, in the case that the delete element (23) is moved back in the input field (19) by means of the sliding movement (38) to a start position (25) which the delete element (23) has at the start of the delete procedure (27).

6. Operating device (8) according to any of the preceding claims, wherein the delete device (22) is designed after the delete procedure (27) to hold the delete element (23) in monostable manner at an edge (26) of the input field (19) or to display it next to the respectively last inputted character (D) and to move the delete element (23) when inputting a further character with an edge of the row (17) of the displayed characters (18).

7. Motor vehicle (1) having a vehicle apparatus (7) and an operating device (8) according to any of the preceding claims, wherein the operating device (8) for operating the vehicle apparatus (7) is coupled therewith.

8. Method for operating an operating device (8), wherein by means of an input device (10) a character input of a user is received, by means of a display device (11) characters (18) inputted by means of the character input are displayed in an input field (19) and by means of a delete device (22) at least one character (18) displayed in the input field (19) is deleted by means of a delete procedure (27), wherein the delete device (22) in the course of a delete procedure (27) moves in the input field (19) the delete element (23) over respectively one of the displayed characters (18) after one another and in this context respectively deletes said character or marks it for a deleting to be carried out at the end of the delete procedure (27), wherein
by means of the delete device (22) in the course of the delete procedure (27) at at least one touch-sensitive touch field (12) a sliding movement (30, 30', 30") of a finger of a user is detected and the movement (28, 39) of the delete element (23) is controlled depending on the sliding movement (30, 30', 30"),
wherein
the input device (10) has an own touchscreen (10) different from the display device (11) or
the input device (10) has an own touchscreen (10) and the display device (11) has a non-touch-sensitive screen,
wherein
the at least one touch field (11, 12) is provided by means of a respective touch-sensitive display surface (11, 12) of the respective touchscreen (10, 11)
and the method is **characterised in that**
the delete device (22) during the delete procedure (27) connects optically using lines (34, 35) an actual touch location (32) of the finger on the touchscreen (10) of the input device (10) with the delete element (23) shown on the display device (11).

## Revendications

1. Dispositif de commande (8), présentant :
- un dispositif de saisie (10) pour la réception d'une saisie de caractères d'un utilisateur,
- un dispositif d'affichage (11) pour l'affichage de caractères saisis (18) dans un champ de saisie (19),
- un dispositif de suppression (22) pour la suppression d'au moins un caractère (18) affiché dans le champ de saisie (19) au moyen d'un élément de suppression (23) dans une opération de suppression (27), dans lequel le dispositif de suppression (22) est aménagé pour déplacer lors de l'opération de suppression (27) dans le champ de saisie (19), l'élément de suppression (23) l'un après l'autre au-dessus de respectivement un des caractères affichés (18) et le supprimer respectivement ce faisant ou le marquer pour une suppression à effectuer à la fin de l'opération de suppression (27), dans lequel
le dispositif de suppression (22) est aménagé pour détecter lors de l'opération de suppression (27) au niveau d'au moins un champ tactile sensible au contact (12) un mouvement de glissement (30, 30', 30") d'un doigt d'un utilisateur et commander le déplacement (28, 39) de l'élément de suppression (23) en fonction du mouvement de glissement détecté (30, 30', 30"),
dans lequel
le dispositif de saisie (10) présente un propre écran tactile (10) différent du dispositif d'affichage (11) ou
le dispositif de saisie (10) présente un propre écran tactile (10) et le dispositif d'affichage (11) présente un écran insensible au contact,
dans lequel
l'au moins un champ tactile (11, 12) est mis à disposition par une surface d'affichage sensible au contact (11, 12) respective de l'écran tactile (10, 11) respectif
et le dispositif de commande est **caractérisé en ce que**
le dispositif de suppression (22) est aménagé pour relier optiquement par des lignes (34, 35) pendant l'opération de suppression (27) un lieu de contact actuel (32) du doigt au niveau de l'écran tactile (10) du dispositif de saisie (10) à l'élément de suppression (23) représenté sur le dispositif d'affichage (11).

2. Dispositif de commande (8) selon la revendication 1, dans lequel le dispositif de suppression (22) est conçu pour déterminer une longueur du chemin de glissement (33) du mouvement de glissement (30, 30', 30") partant d'un bord insensible au contact (37) de l'au moins un champ de contact (12) ou partant d'un point de départ (31, 31') du mouvement de glissement (30, 30") et régler en fonction de la longueur du chemin de glissement (33) sur combien des caractères affichés (18) l'élément de suppression (23) est déplacé.

3. Dispositif de commande (8) selon l'une quelconque des revendications précédentes, dans lequel le dispositif de saisie (10) présente un écran tactile (10) avec un clavier tactile (20) et le dispositif de suppression (22) est aménagé pour reconnaître un mouvement d'essuyage (30") du doigt s'étendant sur plusieurs touches (21) du clavier tactile (20) en tant que le mouvement de glissement (30").

4. Dispositif de commande (8) selon l'une quelconque des revendications précédentes, dans lequel le dispositif de suppression (22) est aménagé pour terminer l'opération de suppression (27) par suppression définitive de l'au moins un caractère affiché (18), si après le mouvement de glissement détecté (30, 30', 30") le doigt est enlevé de l'au moins un champ tactile (12).

5. Dispositif de commande (8) selon l'une quelconque des revendications précédentes, dans lequel le dispositif de suppression (22) est aménagé pour rétablir un caractère supprimé (C, D) ou annuler le marquage (29) d'un caractère marqué à supprimer (C, D), si l'élément de suppression (23) dans le champ de saisie (19) est ramené au moyen du mouvement de glissement (38) à une position de départ (25), que l'élément de suppression (23) présente au début de l'opération de suppression (27).

6. Dispositif de commande (8) selon l'une quelconque des revendications précédentes, dans lequel le dispositif de suppression (22) est aménagé pour maintenir de manière monostable après l'opération de suppression (27) l'élément de suppression (23) au niveau d'un bord (26) du champ de saisie (19) ou l'afficher à côté du respectivement dernier caractère saisi (D) et déplacer l'élément de suppression (23) lors de la saisie d'un autre caractère avec un bord de la rangée (17) des caractères affichés (18).

7. Véhicule (1) avec un appareil de véhicule (7) et un dispositif de commande (8) selon l'une quelconque des revendications précédentes, dans lequel le dispositif de commande (8) pour commander l'appareil de véhicule (7) est couplé avec celui-ci.

8. Procédé pour faire fonctionner un dispositif de commande (8), dans lequel une saisie de caractère d'un utilisateur est reçue par un dispositif de saisie (10), des caractères (18) saisis par la saisie de caractères dans un champ de saisie (19) sont affichés par un dispositif d'affichage (11) et au moins un caractère (18) affiché dans le champ de saisie (19) est supprimé par un dispositif de suppression (22) au moyen d'une opération de suppression (27), dans lequel le dispositif de suppression (22) déplace lors de l'opération de suppression (27) dans le champ de saisie (19), l'élément de suppression (23) l'un après l'autre au-dessus de respectivement un des caractères affichés (18) et le supprime respectivement ce faisant ou le marque pour une suppression à effectuer à la fin de l'opération de suppression (27), dans lequel
un mouvement de glissement (30, 30', 30") d'un doigt d'un utilisateur est détecté par le dispositif de suppression (22) lors de l'opération de suppression (27) au niveau d'au moins un champ tactile sensible au contact (12) et le déplacement (28, 39) de l'élément de suppression (23) est commandé en fonction du mouvement de glissement (30, 30', 30"),
dans lequel
le dispositif de saisie (10) présente un propre écran tactile (10) différent du dispositif d'affichage (11) ou
le dispositif de saisie (10) présente un propre écran tactile (10) et le dispositif d'affichage (11) présente un écran insensible au contact,
dans lequel
l'au moins un champ tactile (11, 12) est mis à disposition par une surface d'affichage sensible au contact (11, 12) respective de l'écran tactile (10, 11) respectif
et le procédé est **caractérisé en ce que**
le dispositif de suppression (22) relie optiquement par des lignes (34, 35) pendant l'opération de suppression (27) un lieu de contact actuel (32) du doigt au niveau de l'écran tactile (10) du dispositif de saisie (10) à l'élément de suppression (23) représenté sur le dispositif d'affichage (11).
